# EUROPEAN PATENT APPLICATION

(11) **EP 3 832 127 A1**
(43) Date of publication of application: **09.06.2021**
(21) Application number: 19213882.4
(22) Date of filing: 05.12.2019
(51) Int. Cl.: F03D 1/06

(54) **WIND TURBINE BLADE FLOW REGULATION**

(71) Applicant: Siemens Gamesa Renewable Energy A/S, 7330 Brande (DK)
(72) Inventor: Buch-Lorentsen, Karsten, 8680 Ry (DK)
(74) Representative: Aspacher, Karl-Georg

(57) **Abstract**

It is disclosed a wind turbine (10) including:
- a pressure supply system (52) for providing a pressurized fluid for operating an aerodynamic device (30) on a blade between a first protruded configuration and a second retracted configuration, the pressure supply system (52) including a pressure line (54) and a suction line (55) and at least one distribution valve (60) for connecting the pressure line (54) and the suction line (55) to the aerodynamic device (30). The distribution valve (60) includes:
- a port (65) connected with the aerodynamic device (30) for sending the pressurized fluid to the aerodynamic device (30) and receiving the pressurized fluid from the aerodynamic device (30),
- a first cavity (61) connected with the pressure line (54) and a second cavity (62) connected with the suction line (55), the first cavity (61) and the second cavity (62) being connectable to the port (65),
- a distribution element (70) having a passage (71) connected to the first and second cavity (61, 62) and the port (65).

## Description

### Field of invention

The present invention relates to a pneumatic distribution device included in a pressure supply system for operating a flow regulating device for controlling the flow on the surface of a blade for a wind turbine.

### Art Background

A wind turbine rotor blade may have installed a flow regulating device on its surface, which flows from the leading edge to the trailing edge of a rotor blade of a wind turbine. An example of such a flow regulating device is a vortex generator (VG) installed on the suction side of the wind turbine rotor blade. In general, a flow regulating device may be considered to comprise a device which is capable of enhancing the lift coefficient of the aerofoil section, for example by increasing the level of energy of the boundary layer of the rotor blade.

Other aerodynamic devices may act in concert with the vortex generator and may influence the effect of the vortex generator depending on the state of the spoiler. Examples of the latter aerodynamic device are typically spoilers, installed on the suction side of the blade, between the trailing edge and the vortex generator. Alternatively, spoilers may be present alone, i.e. not combined with vortex generators or other flow regulating devices. Spoilers may be configured such that its shape and/or orientation can be regulated, e.g. by a pneumatic or hydraulic or mechanical actuator.

The spoiler may act in concert with the vortex generator and may influence the effect of the vortex generator depending on the state of the spoiler, i.e. a protrusion height and/or tilt angle by which the spoiler extends from or is tilted relative to other surface portions of the rotor blade.

EP 1 623 111 discloses a wind turbine blade including adjustable lift-regulating means arranged on or at the surface of the wind turbine blade and extending in the longitudinal direction of the blade and an activation means by which the lift-regulating means can be adjusted and thus alter the aerodynamic properties of the blade. The lift-regulating means comprise one or more flexible flaps.

EP 2 321 528 discloses a wind turbine blade comprising a blade body and a device for modifying the aerodynamic surface or shape of the blade, wherein a pneumatic actuator controls the position and/or movement of the device, wherein a pressure chamber positioned within the blade body is present. The pressure chamber may be pressurized thereby changing the state of the device, thereby modifying the aerodynamic surface or shape of the blade.

WO 2018/041420 disclose a rotor blade comprising an aerodynamic device for influencing the air flow flowing from the leading edge section of the rotor blade to the trailing edge section of the rotor blade, wherein the aerodynamic device is mounted at a surface of the rotor blade and comprises a pneumatic or hydraulic actuator, such as a hose or a cavity of which the volume depends on the pressure of the fluid being present inside the pneumatic or hydraulic actuator.

It is desirable to have spoilers or other flow regulating aerodynamic devices characterized by high efficiency, in particular having a short response time.

### Summary of the Invention

This need may be met by the subject matter according to the independent claims. Advantageous embodiments of the present invention are described by the dependent claims.

According to a first aspect of the present invention, it is provided a wind turbine including:
- at least a rotor blade comprising an aerodynamic device for influencing the airflow flowing from the leading edge section of the rotor blade to the trailing edge section of the rotor blade, wherein the aerodynamic device is mounted at a surface of the rotor blade,
- a pressure supply system for providing a pressurized fluid for operating the aerodynamic device between a first protruded configuration and a second retracted configuration, the pressure supply system including a pressure line and a suction line and at least one distribution valve for connecting the pressure line and the suction line to the aerodynamic device. The distribution valve includes:
- a port connected with the aerodynamic device for sending the pressurized fluid to the aerodynamic device and receiving the pressurized fluid from the aerodynamic device,
- a first cavity connected with the pressure line and a second cavity connected with the suction line, the first cavity and the second cavity having respectively a first opening and a second opening connectable to the port,
- a distribution element having a passage connected to the port, the distribution element being movable between a first operating position in which the passage is in communication with the first cavity through the first opening and a second operating position in which the passage is in communication with the second cavity through the second opening.

The above described arrangement of the pressure supply system allows achieving a short response time in operating the aerodynamic device between the first protruded configuration and the second retracted configuration, by conveniently dimensioning the cavities, the port and the openings a large flow rate of the pressurized fluid through the distribution valve may be enabled.

According to embodiments of the present invention, the distribution element includes a third cavity connected to the port, the third cavity having a third opening in communication with the first opening when the distribution element is in the first operating position a or in communication with the second opening when the distribution element is in the second operating position.

According to other embodiments of the present invention, the distribution element is interposed between the first cavity and the second cavity. The distribution element may rotatable between the first operating position and the second operating position.

According to further embodiments of the present invention, the first cavity and the second cavity are through holes provided in a valve body of the distribution valve. The first cavity and the second cavity may be parallel to each other. The distribution element may be rotatable about an operation axis inclined with respect to a first axis of the first cavity or a second axis of the second cavity.

According to embodiments of the present invention, the pressure supply system comprises a plurality of distribution valves having a plurality of respective first cavities connected to each other to form a pressure passage connected to the pressure line and a plurality of respective second cavities connected to each other to form a suction passage connected to the suction line.

Advantageously, the through-going cavities in the valve bodies of the distribution valves make it easy to assemble a desired number of valves into a valve manifold with common pressure and suction lines.

According to embodiments of the present invention, the distribution valve comprises two stepper motors connected in series for operating the the distribution element between the the first operating position and the second operating position. The two stepper motors provide redundancy during operation of the distribution element of the distribution valve.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine.
- Figure 2: shows a rotor blade of a wind turbine including an aerodynamic device.
- Figures 3 and 4: show a radial section of the rotor blade of figure 2.
- Figure 5: shows a component of a pneumatic arrangement according to the present invention included in the wind turbine of figure 1.
- Figure 6: shows a portion of a pneumatic arrangement according to the present invention included in the wind turbine of figure 1.

### Detailed Description

The drawings are in schematic form. Similar or identical elements are referenced by the same or different reference signs.

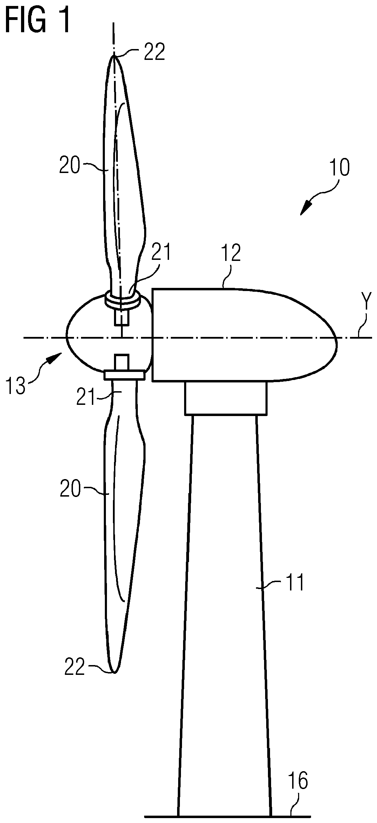

**Figure 1** shows a conventional wind turbine 10 for generating electricity. The wind turbine 10 comprises a tower 11 which is mounted on the ground 16 at one end. At the opposite end of the tower 11 there is mounted a nacelle 12. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). Furthermore, the wind turbine 10 comprises a hub 13 which is rotatable about a rotor axis Y. When not differently specified, the terms axial, radial and circumferential in the following are made with reference to the rotor axis Y.

The hub 13 is often described as being a part of a wind turbine rotor, wherein the wind turbine rotor is capable to rotate about the rotor axis Y and to transfer the rotational energy to an electrical generator (not shown).

The wind turbine 1 further comprises at least one blade 20 (in the embodiment of Figure 1, the wind rotor comprises three blades 20, of which only two blades 20 are visible) mounted on the hub 13. The blades 4 extend substantially radially with respect to the rotational axis Y.

Each rotor blade 20 is usually mounted pivotable to the hub 13, in order to be pitched about respective pitch axes X. This improves the control of the wind turbine and in particular of the rotor blades by the possibility of modifying the direction at which the wind is hitting the rotor blades 20. Each rotor blade 20 is mounted to the hub 13 at its root section 21. The root section 21 is opposed to the tip section 22 of the rotor blade.

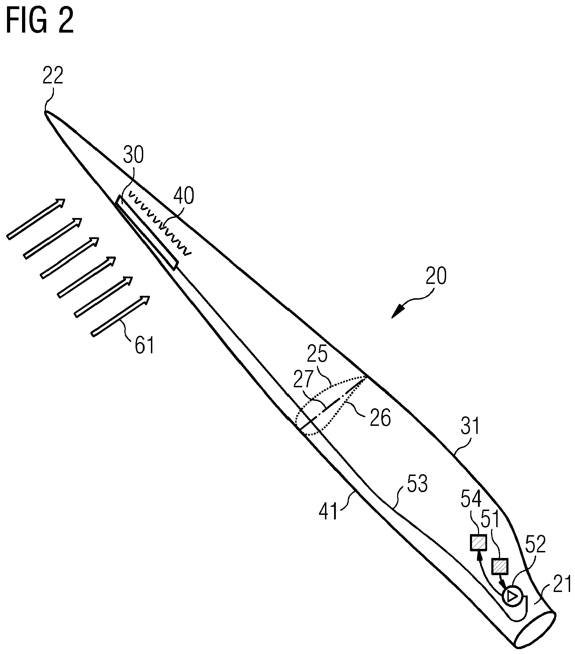

**Figure 2** illustrates the rotor blade 20 comprising an aerodynamic device 30 in the form of an actuated spoiler. Between the root section 21 and the tip section 22 the rotor blade 20 furthermore comprises a plurality of aerofoil sections for generating lift. Each aerofoil section comprises a suction side 25 and a pressure side 26. The aerofoil shape of the aerofoil portion is symbolized by one aerofoil profile which is shown in Figure 2 and which illustrates the cross-sectional shape of the rotor blade at this spanwise position. Also note that the suction side 25 is divided or separated from the pressure side 26 by a chord line 27 which connects a leading edge 41 with a trailing edge 31 of the rotor blade 20.

The aerodynamic device 30 is arranged on the suction side 25 between the leading edge 41 and the trailing edge 31.

The aerodynamic device 30 in Figure 2 is movable by means of an actuating hose 53, which could be in practice realized as tubes or pipes which do not significantly change their volume.

The actuating hose 53 is comprised in a pressure supply system 52, controlled by a control unit 51 and monitored by a monitor unit 54. The pressure supply system 52 provides a pressurized fluid, for example pressurized air or other pressurized gasses. In this context, the term "pressurized fluid" not only implies positive pressure but also negative pressure, wherein fluid is sucked (or "drawn") out of the actuating hose 53 of the aerodynamic device 30. For respectively providing a positive and a negative pressure to the actuating hose 53, the pressure supply system 52 respectively comprises a pressure line and a suction line. Finally, the control unit 51 is responsible for setting a specific pressure at the pressure supply system 52 which subsequently leads to a certain predetermined pressure at the aerodynamic device 30.

In the example shown in Figure 2, the control unit 51, the pressure supply system 52 and the monitor unit 54 are located in the root section 21 of the rotor blade 20. According to other embodiments of the present invention (not shown in the attached figures), these parts could also be placed elsewhere in the wind turbine, such as e.g. in the hub 13 of the wind turbine 10.

The rotor blade 20 additionally comprises a flow regulating unit 40 comprising multiple pairs of vortex generators. The flow regulating unit 40 are arranged on the suction side 25 of the blade 20 between the aerodynamic device 30 and the the trailing edge 31. According to other embodiments of the present invention (not shown in the attached figures), the flow regulating unit 40 are arranged on the suction side 25 of the blade 20 between the leading edge 41 and the aerodynamic device 30. According to other embodiments of the present invention (not shown in the attached figures), the flow regulating unit 40 are not present and only the aerodynamic device 30 is used to regulate the flow on the surface of the blade 20. According to other embodiments of the present invention (not shown in the attached figures), the blade 20 comprises a plurality of aerodynamic devices 30.

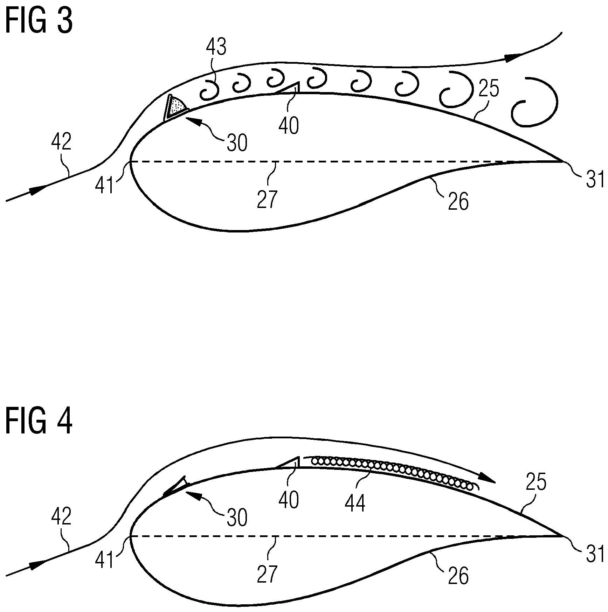

Figure **3** shows the aerodynamic device 30 in a first protruded configuration. In the first configuration the aerodynamic device 30 deviates the airflow 42 which is flowing from the leading edge 41 to the trailing edge 31 of the rotor blade. The aerodynamic device 30 in the first protruded configuration induces stall. This is visualized with relatively large vortices 43 downstream of the aerodynamic device 30. A consequence of the induced stall is a decrease in lift of the rotor blade and, consequently, a reduced loading of the rotor blade and related components of the wind turbine. To move the aerodynamic device 30 in the first protruded configuration, the pressure supply system 52 provides a positive pressure to the actuating hose 53 by connecting it to a pressure line, as further detailed in the following.

Figure **4** shows the aerodynamic device 30 in a second retracted configuration, i.e. moved downwards towards the surface of the rotor blade 20. In this second configuration, the airflow 41 flowing across the aerodynamic device 30 remains attached to the surface of the rotor blade 20, thus that no flow separation, i.e. stall, occurs. As a consequence, the lift of the rotor blade increases. Re-energizing vortices 44 are generated in the boundary layer by the vortex generators 40, which have the effect of helping to increase the lift. As a result, the highest lift values can be achieved. To move the aerodynamic device 30 in the second retracted configuration, the pressure supply system 52 provides a negative pressure to the actuating hose 53 by connecting it to a suction line, as further detailed in the following.

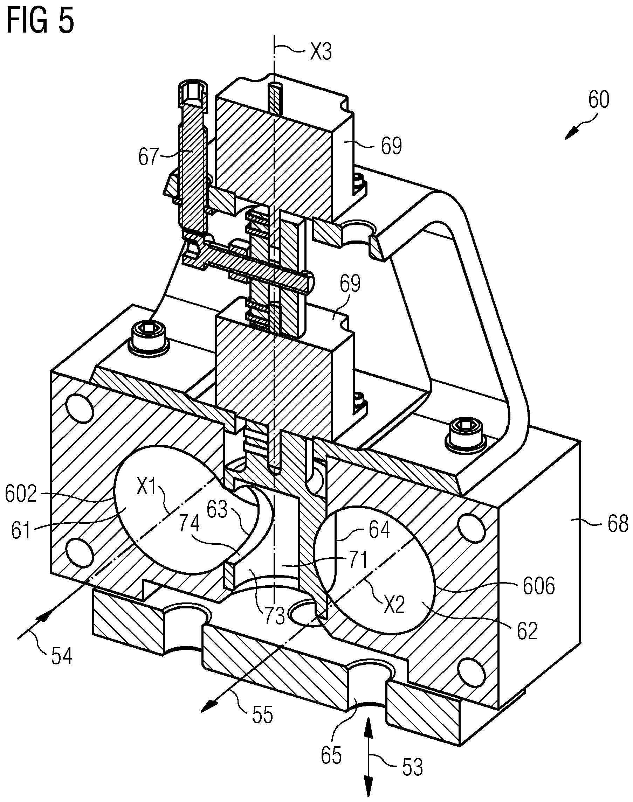

**Figure 5** shows a distribution valve 60 for alternatively connecting the actuating hose 53 to a pressure line 54 and the suction line 55 (schematically represented in figure 5 by three respective arrows). When the distribution valve 60 connects the aerodynamic device 30 to the pressure line 54, the aerodynamic device 30 is moved in the first protruded configuration (figure 3). When the distribution valve 60 connects the aerodynamic device 30 to the suction line 55, the aerodynamic device 30 is moved in the second retracted configuration (figure 4). In the embodiment of figure 5 the distribution valve 60 have three ports and two positions. The distribution valve 60 includes a valve body 68, where three ports 60a, 60b and 65 are provided. The first port 60a is connected to the pressure line 54. The second port 60b is connected to the suction line 55. The third port 65 is connected to the actuating hose 53 for sending the pressurized fluid from the pressure line 54 to the aerodynamic device 30 (thus moving the aerodynamic device 30 to the first protruded configuration) and for receiving the pressurized fluid that flows from the aerodynamic device 30 (thus moving the aerodynamic device 30 to the second protruded configuration) towards the suction line 55. The distribution valve 60 further includes a first cavity 61 connected with the pressure line 54 through the first port 60a and a second cavity 62 connected with the suction line 55 through the second port 60b. The first cavity 61 and the second cavity 62 have respectively a first opening 63 and a second opening 64. The distribution valve 60 further includes a distribution element 70 for connecting the first opening 63 and a second opening 64 to the third port 65. The distribution element 70 has a passage 71 connected to the port 65 and is movable between a first operating position in which the passage 71 is on communication with the first cavity 61 through the first opening 63 and a second operating position in which the passage 71 is on communication with the second cavity 62 through the second opening 64. In the first operating position of the distribution element 70, the distribution valve 60 connects the aerodynamic device 30 to the pressure line 54. In the second operating position of the distribution element 70, the distribution valve 60 connects the aerodynamic device 30 to the suction line 55. The passage 71 includes a third cavity 73 connected to the port 65 in both the first and the second operating positions of the distribution element 70. The third cavity 73 has a third opening 74 in communication with the first opening 63 when the distribution element 70 is in the first operating position and in communication with the second opening 64 when the distribution element 70 is in the second operating position. By conveniently dimensioning the cavities 71, 72, 73, the ports 60a, 60b, 65 and the openings 63, 64, 74, a large flow rate of the pressurized fluid through the distribution valve may be enabled, thus achieving a short response time in operating the aerodynamic device 30 between the first protruded configuration and the second retracted configuration.

The first cavity 61 and the second cavity 62 may be provided in the valve body 68 as two respective through holes having a respective first axis X1 and a second axis X2. The axes X1, X2 of the first cavity 61 and the second cavity 62 may be parallel to each other. The distribution element 70 is interposed between the first cavity 61 and the second cavity 62. The distribution element 70 is rotatable between the first operating position and the second operating position. The distribution element 70 may be rotatable about an operation axis X3 inclined with respect to the first axis X1 of the first cavity 61 and the second axis X2 of the second cavity 62. The operation axis X3 may be orthogonal with respect to the plane identified by the first axis X1 and the second axis X2. The first operating position and the second operating position may be angularly distanced from one another of an angle comprised between 90 and 270 degrees. The first operating position and the second operating position may be angularly distanced from one another of an angle of 180 degrees. The distribution element 70 and the third cavity 73 may be cylindrical and co-axial with the operation axis X3. According to other embodiments of the present invention (not shown), the distribution element is translatable between the first operating position and the second operating position. The distribution valve 60 further comprises two stepper motors 69 co-axial with the operation axis X3 and connected in series for operating the the distribution element 70 between the the first operating position and the second operating position. The stepper motors ensure that the distribution element 70 can switch very fast between the the first operating position and the second operating position. The presence of two stepper motors 69 provides a convenient level of redundancy. The distribution valve 60 further comprises an inductive sensor 67 used for zero-point adjustment of the stepper motors 69. According to other embodiments of the present invention (not shown), the distribution valve 60 has a pneumatic activation or a solenoid activation.

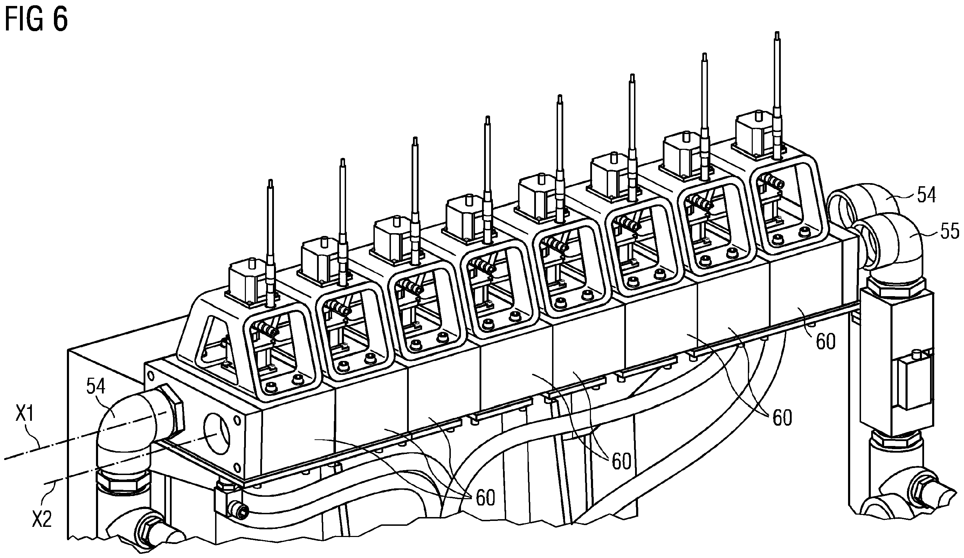

**Figure 6** shows an arrangement of a plurality of distribution valves 60 having a plurality of respective first cavities 61 connected to each other to form a pressure passage connected to the pressure line 54 and a plurality of respective second cavities 62 connected to each other to form a suction passage connected to the suction line 55. All the first cavities 61 are aligned along the respective first axis X1. All the second cavities 62 are aligned along the respective second axis X2. The through-going cavities 61, 62 in the valve bodies 68 of the distribution valves 60 make it easy to assemble a desired number of valves into a valve manifold with common pressure and suction lines 54, 55. Each aerodynamic device 30 is operated by a respective distribution valve 60. According to other embodiments of the present invention (not shown) a plurality of aerodynamic devices 30 are operated by a respective common distribution valve 60. In a possible embodiment of the present invention, one distribution valve 60 may be used to operate one aerodynamic device 30 for each blade 20 simultaneously, e.g. three flaps three aerodynamic device 30 respectively provided on three blades 20. The distribution valve(s) 60 may be placed in the hub 13 or within a blade 20, e.g. in the root section 21 of one or more the blades 20. In a possible embodiment of the present invention, each blade 20 comprises a plurality of aerodynamic devices 30 at a respective plurality of locations and a respective plurality of distribution valves 60, each distribution valve 60 being provided for controlling the aerodynamic devices 30 positioned at corresponding locations in different blades 20. Accordingly, the rotor plane of the wind turbine can be divided into portions extending along the blades and comprised between the blade root 21 and the blade tip 20, each portion comprising one or more aerodynamic devices 30 and one distribution valve 60 being provided for operating all the aerodynamic devices 30 in corresponding portions of all the blades, for example one distribution valve 60 for operating all the aerodynamic devices 30 in all the portions closer to the blade roots 21 and one distribution valve 60 for operating all the aerodynamic devices 30 in all the portions closer to the blade tips 22.

## Claims

1. A wind turbine (10) including:
- at least a rotor blade (20) comprising an aerodynamic device (30) for influencing the airflow (61) flowing from the leading edge section (24) of the rotor blade (20) to the trailing edge section (23) of the rotor blade (20), wherein the aerodynamic device (30) is mounted at a surface (28) of the rotor blade (20),
- a pressure supply system (52) for providing a pressurized fluid for operating the aerodynamic device (30) between a first protruded configuration and a second retracted configuration, the pressure supply system (52) including a pressure line (54) and a suction line (55) and at least one distribution valve (60) for connecting the pressure line (54) and the suction line (55) to the aerodynamic device (30),
wherein the distribution valve (60) includes:
- a port (65) connected with the aerodynamic device (30) for sending the pressurized fluid to the aerodynamic device (30) and receiving the pressurized fluid from the aerodynamic device (30),
- a first cavity (61) connected with the pressure line (54) and a second cavity (62) connected with the suction line (55), the first cavity (61) and the second cavity (62) having respectively a first opening (63) and a second opening (64) connectable to the port (65),
- a distribution element (70) having a passage (71) connected to the port (65), the distribution element (70) being movable between a first operating position in which the passage (71) is in communication with the first cavity (61) through the first opening (63) and a second operating position in which the passage (71) is in communication with the second cavity (62) through the second opening (64).

2. The wind turbine (10) according to claim 1, wherein the distribution element (70) includes a third cavity (73) connected to the port (65), the third cavity (73) having a third opening (74) in communication with the first opening (63) when the distribution element (70) is in the first operating position a or in communication with the second opening (64) when the distribution element (70) is in the second operating position.

3. The wind turbine (10) according to claim 1 or 2, wherein the distribution element (70) is interposed between the first cavity (61) and the second cavity (62).

4. The wind turbine (10) according to claim 3, wherein the distribution element (70) is rotatable between the first operating position and the second operating position.

5. The wind turbine (10) according to claim 4, wherein the first cavity (61) and the second cavity (62) are through holes provided in a valve body of the distribution valve (60) .

6. The wind turbine (10) according to claim 5, wherein the first cavity (61) and the second cavity (62) are parallel to each other.

7. The wind turbine (10) according to claim 5 or 6, wherein the distribution element (70) is rotatable about an operation axis (X3) inclined with respect to a first axis (X1) of the first cavity (61) or a second axis (X2) of the second cavity (62) .

8. The wind turbine (10) according to any of the previous claims 4 to 7, wherein the first operating position and the second operating position are distanced from one another of an angle comprised between 90 and 270 degrees.

9. The wind turbine (10) according to any of the previous claims 5 to 7, wherein the pressure supply system (52) comprises a plurality of distribution valves (60) having a plurality of respective first cavities (61) connected to each other to form a pressure passage connected to the pressure line (54) and a plurality of respective second cavities (62) connected to each other to form a suction passage connected to the suction line (55).

10. The wind turbine (10) according to any of the previous claims, wherein the distribution valve (60) comprises two stepper motors (69) connected in series for operating the the distribution element (70) between the the first operating position and the second operating position.
